# EUROPÄISCHE PATENTSCHRIFT

(11) **EP 2 329 750 B1**
(45) Veröffentlichungstag und Bekanntmachung des Hinweises auf die Patenterteilung: **06.03.2013**
(21) Anmeldenummer: 10189165.3
(22) Anmeldetag: 28.10.2010
(51) Int. Cl.: A47J 36/20, A47J 27/10

(54) **Korbeinsatz zum Garen von Lebensmitteln**
Basket insert for cooking food
Installation de panier pour la cuisson de produits alimentaires

(30) Priorität: 03.12.2009 DE 102009056847
(43) Veröffentlichungstag der Anmeldung: 08.06.2011
(73) Patentinhaber: WMF WÜRTTEMBERGISCHE METALLWARENFABRIK AG, 73309 Geislingen/Steige (DE)
(72) Erfinder: Ramminger, Peter, 73312 Aufhausen (DE); Tatzelt, Peter, 73340 Amstetten (DE); Geiger, Martin, 73329 Kuchen (DE)
(74) Vertreter: BRP Renaud & Partner

(56) Entgegenhaltungen:
- DE-C- 276 438
- DE-U1-202005 002 658
- US-A- 1 482 203
- US-A- 2 522 152
- US-A- 2 588 614
- US-A- 2 628 738

## Beschreibung

Die Erfindung betrifft einen Korbeinsatz zum Garen von Gargut in einer Flüssigkeit, insbesondere einen Nudeleinsatz zum Kochen von Nudeln in Wasser, wie aus dem Dokument US 2 522 152 bekannt.

Derzeit werden Nudeln ganz einfach in einem Topf z.B. mit Wasser gegart. Nach dem Abschluss des Garvorgangs werden die Nudeln zusammen mit dem Wasser in ein Sieb geschüttet, wobei die Nudeln in dem Sieb verbleiben und das Wasser über die Löcher des Siebes von den Nudeln getrennt werden. Derzeit ist ebenfalls die Verwendung von wasserdurchlässigen Korbeinsätzen bekannt, wobei die Nudeln in einen solchen siebartigen Korbeinsatz gefüllt werden, der dann in den mit Wasser gefüllten Topf gestellt wird. Nach dem Garvorgang wird der Korbeinsatz mitsamt den Nudeln aus dem mit heißem Wasser gefüllten Topf entnommen, wobei das Wasser durch Öffnungen im Korbeinsatz aus dem Korbeinsatz zurück in den Topf fließt. In einem weiteren Schritt muss nun der Korbeinsatz gekippt werden, um die gekochten Nudeln in ein anderes Gefäß, wie z. B. ein Serviergefäß, umzufüllen. Da der Korbeinsatz nach Entnahme aus dem mit hei-βem Wasser gefüllten Topf ebenfalls noch eine sehr hohe Temperatur aufweist, ist ein solches Umkippen der Nudeln in ein anderes Gefäß zum einen umständlich und zum anderen gefährlich in Folge des heißen Korbeinsatzes, sowie durch in dem Korbeinsatz verbliebenen heißen Restwasser.

Die vorliegende Erfindung beschäftigt sich mit dem Problem, für einen gattungsgemäßen Korbeinsatz, eine verbesserte oder zumindest eine andere Ausführungsform anzugeben, die sich insbesondere durch eine verbesserte Bedienung und eine geringere Verletzungsgefahr auszeichnet.

Erfindungsgemäß wird dieses Problem durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, einen Korbeinsatz zum Garen von Gargut in einem Fluid, insbesondere einen Nudeleinsatz zum Kochen von Nudeln in Wasser, mit einem klappbaren Boden zu versehen, wobei der klappbare Boden durch einen Arretiermechanismus fixiert wird, der über eine Betätigungseinrichtung verriegelt oder entriegelt werden kann, so dass das Gargut über den geöffneten Boden des Korbeinsatzes umgefüllt werden kann. Durch einen solchen betätigbaren, klappbaren Boden kann dem Benutzer das umständliche und gefährliche Entleeren des Korbeinsatzes über die Einfüllöffnung erspart werden. Demzufolge besteht für den Benutzer keine Verbrennungsgefahr durch die heißen Oberflächen des Korbeinsatzes oder durch im Korbeinsatz verbliebenes heißes Restwasser. Gleichzeitig wird die Bedienung deutlich vereinfacht und es muss nicht gewartet werden, bis der Korbeinsatz soweit abgekühlt ist, dass ein Umfüllen des Gargutes aus dem Korbeinsatz in ein anderes Gefäß gefahrlos möglich ist. Somit kann das Gargut immer frisch und direkt nach dem Garvorgang zügig serviert werden.

Damit das Fluid/Wasser während der Entnahme aus dem Korbeinsatz ablaufen kann, ist der Boden und/oder die Wandung des Korbeinsatzes wasserdurchlässig auszugestalten. Dabei kann für den Boden und/oder für die Wandung des Korbeinsatzes ein Drahtgeflecht zum Einsatz kommen oder ein mit Durchgangsöffnungen versehenes Blech. Bevorzugt wird dabei ein Drahtgeflecht oder ein Blech aus Edelstahl oder einer nichtrostenden Legierung verwendet. Die Durchgangsöffnungen können als runde bzw. eckige Löcher oder als Schlitze ausgebildet sein.

Damit der Korbeinsatz einfach aus dem mit Fluid befüllten Topf entnommen werden kann, ist der Korbeinsatz mit einer Halteeinrichtung ausgestattet. Die Halteeinrichtung ist bevorzugt im Bereich der Einfüllöffnung des Korbeinsatzes angeordnet und kann als Henkel oder Griff ausgebildet sein.

Um den Benutzer vor der Hitze z. B. des aufsteigenden Dampfes zu schützen, wenn dieser den Korbeinsatz aus den mit heißem Fluid befüllten Topf heraushebt, kann bevorzugt im Bereich der Halteeinrichtung eine Hitzeschutzeinrichtung vorgesehen sein, so dass die Hand des Benutzers vor der direkten Hitzeeinwirkung des Fluides bzw. des Dampfes geschützt ist. Die Hitzeschutzeinrichtung kann in Form einer in Richtung der Einfüllöffnung geöffneten Halbkugel ausgebildet sein, wobei als Material Kunststoff, insbesondere wärmeisolierender Kunststoff, zum Einsatz kommen kann.

Der klappbare Boden kann aus zumindest zwei Teilklappen aufgebaut sein und in Art einer Falltüre ausgebildet sein, wobei in diesem Ausführungsform die Teilklappen in geöffneten Zustand aus dem Korbeinsatz hinausragen. In einer weiteren Ausführungsform ist es jedoch auch denkbar, die zumindest zwei Teilklappen zumindest teilweise zusammenklappbar auszugestalten, so dass im geöffneten Zustand die Teilklappen in den Korbeinsatz hineinragen. Demzufolge ist im Falle der Ausbildung der Teilklappen als Falltüre der Arretiermechanismus anders auszubilden als in der zweiten geschilderten Ausführungsform.

Des Weiteren kann die Betätigungseinrichtung zur Betätigung des Arretiermechanismus als Halteeinrichtung ausgebildet sein, oder die Betätigungseinrichtung ist an einer Halteeinrichtung ausgebildet. Im Falle der Ausbildung der Betätigungseinrichtung als Halteeinrichtung kann dies in Form eines Griffes vorgenommen werden, wobei durch Drehbewegung des Griffes der klappbare Boden geöffnet wird. Im Falle der Ausbildung der Betätigungseinrichtung an der Halteeinrichtung könnte durch Ziehen der Betätigungseinrichtung gegen die Halteeinrichtung analog mancher Gangschaltungen bei Kraftfahrzeugen, der klappbare Boden geöffnet werden.

Idealerweise findet ein solcher Korbeinsatz Anwendung im Bereich der Haushaltsküchengeräte. Aber auch größere Ausführungsformen für Großküchen sind vorstellbar. Dabei können solche Korbeinsätze für Großküchen mit einer separaten Halteeinrichtung und Betätigungseinrichtung ausgestattet sein. So wäre es im Falle des Einsatzes im Großküchenbereich denkbar, die Betätigungseinrichtung nicht im Bereich der Haltevorrichtung anzubringen, sondern seitlich am Korbeinsatz im Bereich des klappbaren Bodens, sodass nach Positionierung des Korbeinsatzes mittels der Halteeinrichtung über ein bereitgestelltes Gefäß der Benutzer mittels der seitlich angeordneten Betätigungseinrichtung den klappbaren Boden öffnen kann, so dass aus dem Korbeinsatz das Gargut in das bereitgestellte Gefäß über den geöffneten Boden umgefüllt werden kann.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine einfüllöffnungsseitige Ansicht des Korbeinsatzes,
- Fig. 2: eine bodenseitige Ansicht des Korbeinsatzes.

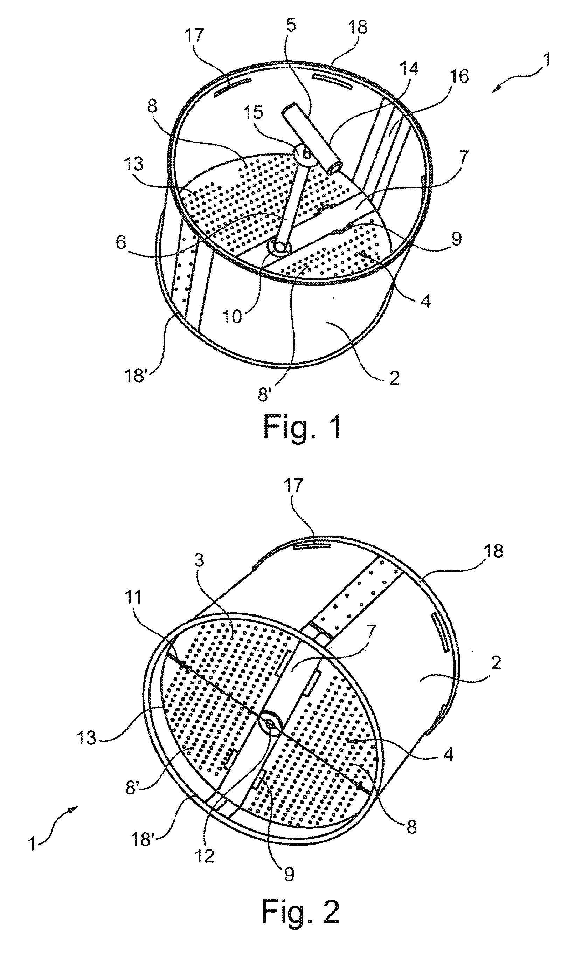

Wie in Fig. 1 gezeigt, ist ein Korbeinsatz 1 mit einer Wandung 2 und einem klappbaren Boden 3 ausgestattet. Dabei kann der Boden 3 mehrere Durchgangsöffnungen 4 aufweisen, über die ein Fluid, beispielsweise Wasser, bei Entnahme des Korbeinsatzes 1 aus einem Gargefäß aus diesem abfließen kann. Es ist jedoch auch denkbar, dass die Wandung 2 mit Durchgangsöffnungen versehen ist. Je mehr Durchgangsöffnungen der Korbeinsatz 1 aufweist, desto schneller und einfacher kann das Fluid abfließen und desto vorteilhafter ist die Durchmischung des Fluides im Gargefäß und desto gleichmäßiger und schneller verläuft der Garprozess. Die Durchgangsöffnungen 4 können dabei wie in Fig. 1 gezeigt, als Lochmatrix ausgebildet sein, wobei die Löcher der Lochmatrix rund oder eckig ausgebildet sein können. Des Weiteren sind jedoch auch als Schlitze ausgebildete Durchgangsöffnungen 4 im Boden 3 und/oder der Wandung 2 realisierbar.

Des Weiteren ist der Korbeinsatz 1 mit einer Halteeinrichtung 5 ausgestattet. Diese Halteeinrichtung 5 kann gemäß Fig. 1 als ein Griff 14 ausgebildet sein, der über ein Stabelement 6 mit einem Verbindungssteg 7 verbunden ist. An dem Verbindungssteg 7 sind zum einen zwei Teilklappen 8,8' des Bodens 3 klappbar über mehrere Scharniere 9 angebunden und zum anderen ist die Halteeinrichtung 5 über zumindest ein Befestigungselement 10 fixiert.

Eine bevorzugte Ausführungsform wird in Fig. 2 verdeutlicht. Dabei fungiert die Halteeinrichtung 5, die drehbar gegenüber dem Boden 3 ausgebildet ist, gleichzeitig auch als Betätigungseinrichtung für einen Arretiermechanismus dienen, der als stabförmiges Riegelelement 11 ausgebildet ist. Dabei ist das Riegelelement 11 zum einen verdrehfest mit dem Stabelement 6 der Halteeinrichtung 5 über ein Befestigungselement 12 verbunden und kann zum anderen in einem in der bodenseitigen Wandung 2 angeordneten Ringnutelement 13 geführt sein. Wird nun die Halteeinrichtung an dem Griff 14, wie in Fig. 1 dargestellt, gegenüber dem Boden 1 verdreht, verdreht sich dass Riegelelement 11 solange, bis es unterhalb des Verbindungssteges 7 angeordnet ist. In dieser Stellung des Riegelelementes 11 werden die Teilklappen 8,8' nicht mehr durch das Riegelelement 11 am Abklappen gehindert und können in Art einer Falltüre aus dem Korbeinsatz 1 hinausklappen, wodurch sich der klappbare Boden 3 öffnet und ein Umfüllen des Gargutes aus dem Korbeinsatz 1 über dem geöffneten Boden 3 in ein ggf. bereitgestelltes Gefäß möglich wird. Durch Rückdrehen des Riegelelementes 11 in die ursprüngliche Position lässt sich der Boden 3 wieder verschließen.

Eine ähnliche Funktionsweise ist auch mittels eines an einem ggf. kleiner ausgebildeten Stabelement 6 angeordneten Henkels ausbildbar.

Eine alternative Ausführungsform kann eine Betätigungseinrichtung 15 aufweisen, die, wie in Fig. 1 gezeigt, unterhalb des Griffes 14 an der Halteeinrichtung 5 angeordnet ist. Durch Bewegen der Betätigungseinrichtung 15 in Richtung des Griffes 14, analog mancher Gangschaltungen bei Kraftfahrzeugen, soll es möglich sein, dass ein in den Figuren nicht gezeigter Arretiermechanismus entriegelt wird. Ist der Arretiermechanismus entriegelt, so kann der Verbindungssteg 7 entlang mehrerer Führungselemente 16 durch Ziehen an der Halteeinrichtung 5 in den Korbeinsatz 1 hinein verschoben werden. Da nun die Teilklappen 8,8' über die Scharniere 9 klappbar mit dem Verbindungssteg 7 verbunden sind, führt eine Bewegung des Verbindungssteges 7 in den Korbeinsatz 1 hinein zu einem zumindest teilweisen Zusammenklappen der Teilklappen 8,8'. Während dieser Bewegung können die Teilklappen 8,8' durch das in Fig. 2 gezeigte stabförmige Riegelelement 11 zum einen geführt werden und zum anderen verhindert das Riegelelement 11 ein Herausklappen der Teilklappen 8,8' aus dem Korbeinsatz 1. Dabei ist das Riegelelement 11 verdrehfest und an die Wandung 2 angebunden ausgebildet, da in dieser Ausführungsform der klappbare Boden 3 nicht durch Verdrehen des Riegelelementes 11 geöffnet wird. Besonders vorteilhaft an dieser Ausführungsform ist, dass das Entleeren des Korbeinsatzes 1 einhändig durchgeführt werden kann, da nach Positionierung des Korbeinsatzes über ein bereitgestelltes Gefäß der Arretiermechanismus mit einer Hand durch Heranziehen der Betätigungseinrichtung 15 zu dem Griff 14 entriegelt werden kann.

An den Teilklappen 8,8' können bei dieser Ausführungsform in den Figuren nicht gezeigte Aussparungen randseitig angeordnet sein, mittels derer die Teilklappen 8,8' an dem Riegelelement 11 entlang geführt werden können, wenn sich der Verbindungssteg 7 in den Korbeinsatz 1 hineinbewegt. Zusätzlich kann der Korbeinsatz 1 mit Verstärkungen 17 im Bereich der Einfüllöffnung und/oder im Bereich des Bodens 3 ausgestattet sein. Solche Verstärkungen 17 können z. B. als in die Wandung 2 eingelassen Ringdrähte ausgebildet sein.

Ebenso ist eine Ausstattung des Korbeinsatzes 1 mit Randelementen 18, 18' im Bereich der Einfüllöffnung und/oder im Bereich des Bodens 3 denkbar. Dabei können diese Randelemente 18, 18' aus Kunststoff ausgebildet sein. Dadurch kann beim Abstellen des Korbeinsatzes 1 auf eine Unterfläche eine Beschädigung der Unterfläche durch das harte metallische Material des Korbeinsatzes 1 verringert bzw. verhindert werden. Sind die Randelemente 18, 18' zudem aus einem isolierenden Material ausgebildet, so lässt sich ein heißer Korbeinsatz 1 mittels der Randelemente 18, 18' gefahrloser Anfassen.

## Patentansprüche

1. Korbeinsatz (1) zum Garen von Gargut in einer Flüssigkeit, insbesondere ein Nudeleinsatz zum Kochen von Nudeln, mit
- einem klappbaren Boden (3),einem über eine Betätigungseinrichtung (5, 15) betätigbaren Arretiermechanismus zum Öffnen und damit zum Entleeren des Korbeinsatzes (1) und zum Fixieren des klappbaren Bodens (3) in geschlossenem Zustand, wobei der klappbare Boden (3) zumindest zwei, insbesondere halbkreisförmige, Teilklappen (8,8') aufweist,
**dadurch gekennzeichnet,**
- **dass** die Betätigungseinrichtung (15) an einer Halteeinrichtung (5) ausgebildet ist,
- **dass** die Betätigungseinrichtung (15) derart beweglich relativ zu der Halteeinrichtung (5) ausgebildet ist, dass durch Bewegen der Betätigungseinrichtung (15) gegen die Halteeinrichtung (5) der Arretiermechanismus entriegelt wird,
- **dass** die Teilklappen (8,8') so ausgebildet sind, dass sie bei entriegeltem Arretiermechanismus durch Ziehen an der Halteeinrichtung (5) zumindest teilweise zusammenklappbar sind, wobei sie im zumindest teilweise zusammengeklappten Zustand in den Korbeinsatz (1) hineinragen.

2. Korbeinsatz (1) nach Anspruch 1,
**dadurch gekennzeichnet,**
**dass** die Betätigungseinrichtung als Halteeinrichtung (5, 14) ausgebildet ist, über welche ein Halten und/oder ein Transport des Korbeinsatzes (1) möglich sind/ist.

3. Korbeinsatz (1) nach Anspruch 2,
**dadurch gekennzeichnet,**
**dass** die Halteeinrichtung (5, 14) eine, insbesondere aus Kunststoff ausgebildete, Hitzeschutzeinrichtung aufweist.

4. Korbeinsatz (1) nach einem der Ansprüche 2 bis 3,
**dadurch gekennzeichnet,**
**dass** die Halteeinrichtung (5, 14) drehbar ausgebildet ist, wobei ein Verdrehen derselben ein Ver- bzw. Entriegeln des Arretiermechanismus bewirkt.

5. Korbeinsatz (1) nach Anspruch 4,
**dadurch gekennzeichnet,**
**dass** der Arretiermechanismus ein sich über den Durchmesser des Bodens (3) erstreckendes und mit der Betätigungseinrichtung (5, 14) drehfest verbundenes Riegelelement (11) aufweist, welches in einer ersten Drehlage den Boden (3) oder zumindest eine Teilklappe (8,8') stützt und dadurch in geschlossenem Zustand hält, und welches in einer zweiten Drehlage ein Abklappen des Bodens (3) bzw. zumindest einer Teilklappe (8,8') erlaubt.

6. Korbeinsatz (1) nach einem der Ansprüche 4 bis 5,
**dadurch gekennzeichnet,**
**dass** die zumindest zwei Teilklappen (8,8') in geöffnetem Zustand falltürartig nach unten abklappen.

## Claims

1. A basket insert (1) for cooking products in a liquid, in particular a noodle insert for cooking noodles, comprising
- a foldaway bottom (3), a locking mechanism, which can be activated via an activating device (5, 15), for opening and thus for emptying the basket insert (1) and for fixing the foldaway bottom (3) in the closed state, wherein the foldaway bottom (3) encompasses at least two, in particular semicircular partial flaps (8, 8'),
**characterized in**
- **that** the activating device (15) is embodied on a holding device (5),
- **that** the activating device (15) is embodied so as to be movable relative to the holding device (5) such that the locking mechanism is unlocked by moving the activating device (15) against the holding device (5),
- **that** the partial flaps (8, 8') are embodied such that they can at least be partially folded up by pulling the holding device (5) when the locking mechanism is unlocked, wherein they extend into the basket insert (1) in the at least partially folded up state.

2. The basket insert (1) according to claim 1, **characterized in that** the activating device is embodied as holding device (5, 14), via which a holding and/or a transport of the basket insert (1) is/are possible.

3. The basket insert (1) according to claim 2, **characterized in that** the holding device (5, 14) encompasses a heat protection device, in particular being made of plastic.

4. The basket insert (1) according to one of claims 2 to 3, **characterized in that** the holding device (5, 14) is embodied so as to be rotatable, wherein a rotation thereof effects a locking or unlocking, respectively, of the locking mechanism.

5. The basket insert (1) according to claim 4, **characterized in that** the locking mechanism encompasses a locking element (11), which extends across the diameter of the bottom (3) and which is connected to the activating device (5, 14) in a torque-proof manner and which supports the bottom (3) or at least a partial flap (8, 8') in a first rotational position and thus holds it in a closed state, and which allows the bottom (3) or at least a partial flap (8, 8'), respectively, to be folded in in a second rotational position.

6. The basket insert (1) according to one of claims 4 to 5, **characterized in that** the at least two partial flaps (8, 8') fold in downwards in a trap door-like manner in the open state.

## Revendications

1. Panier insérable (1) pour faire cuire des produits à cuire dans un liquide, notamment un insert à pâtes alimentaires pour faire cuire des pâtes alimentaires, avec
- un fond (3) rabattable, un mécanisme de blocage actionnable par l'intermédiaire d'un système de manoeuvre (5, 15) pour ouvrir et donc pour vider le panier insérable (1) et pour fixer le fond (3) rabattable en position fermée, le fond (3) rabattable comportant au moins deux volets partiels (8, 8') notamment en forme de demi-cercle,
**caractérisé en ce que**
- le système de manoeuvre (15) est conçu sur un système de maintien (5),
- **en ce que** le système de manoeuvre (15) est conçu de manière mobile par rapport au système de maintien (5), de telle sorte que par déplacement du système de manoeuvre (15) contre le système de maintien (5) on déverrouille le mécanisme de blocage,
- **en ce que** les volets partiels (8, 8') sont conçus de telle sorte que lorsque le mécanisme de blocage est déverrouillé, par traction sur le système de maintien (5), ils soient au moins en partie repliables, sachant qu'en position au moins partiellement repliée, ils saillissent dans le panier insérable (1).

2. Panier insérable (1) selon la revendication 1, **caractérisé en ce que** le système de manoeuvre est conçu en tant que système de maintien (5, 14) par l'intermédiaire duquel un maintien et/un transport du panier insérable (1) est/sont possible(s).

3. Panier insérable (1) selon la revendication 2, **caractérisé en ce que** le système de maintien (5, 14) comporte un système de protection thermique, notamment conçu en matière plastique.

4. Panier insérable (1) selon l'une quelconque des revendications 2 à 3, **caractérisé en ce que** le système de maintien (5, 14) est conçu en version rotative, une rotation de ce dernier provoquant un verrouillage ou un déverrouillage du mécanisme de blocage.

5. Panier insérable (1) selon la revendication 4, **caractérisé en ce que** le mécanisme de blocage comporte un élément de verrouillage (11) s'étendant sur le diamètre du fond (3) et relié de manière solidaire en rotation avec le système de manoeuvre (5, 14), qui dans une première position en rotation soutient le fond (3) ou au moins un volet partiel (8, 8') et le maintient de ce fait en position fermée et qui dans une deuxième position en rotation permet de rabattre vers le bas le fond (3) ou au moins un volet partiel (8, 8').

6. Panier insérable (1) selon l'une quelconque des revendications 4 à 5, **caractérisé en ce qu'**en position ouverte, les au moins deux volets partiels (8, 8') se rabattent vers le bas à la manière d'une trappe.
